# EUROPEAN PATENT SPECIFICATION

(11) **EP 2 160 052 B1**
(45) Date of publication and mention of the grant of the patent: **02.11.2011**
(21) Application number: 08015397.6
(22) Date of filing: 01.09.2008
(51) Int. Cl.: H04W 4/24

(54) **Method, system and adapter for connecting a plurality of devices**
Verfahren, System und Adapter zum Verbinden einer Vielzahl von Vorrichtungen
Procédé, système et adaptateur pour connecter plusieurs dispositifs

(43) Date of publication of application: 03.03.2010
(73) Proprietor: Vodafone Holding GmbH, 40213 Düsseldorf (DE)
(72) Inventor: Koraichi, Najib, 6333 CT Schimmert (NL); Montaner, Javier, 10-B, 50008 Zaragoza (ES)
(74) Representative: Jostarndt, Hans-Dieter

(56) References cited:
- EP-A- 0 817 458
- EP-A- 1 051 052
- EP-A- 1 357 732
- EP-A- 1 600 885
- US-A1- 2008 101 567

## Description

### Technical Field

The present invention is related to a method for connecting a device to a communication network. In particular, the invention relates to a method according to claim 1. Furthermore, the present invention is related to an adapter module according to claim 8, a system according to claim 10 and a mobile communication device according to claim 14.

### Background of the invention

Today many users have not only one mobile communication device but a plurality of them. Frequently, the different mobile communication devices are connected to networks of different providers having different rates. But also for a single provider there are different subscription plans such as morning plan and evening plan resulting into different communication costs depending on which communication device is selected. In order to always have the lowest connection costs the user has to be aware of the details of every subscription plan he has. Consequently, users switch between handsets based on the different plans offered by the providers. The same situation applies to international users that have a different subscription plan for every country they visit.

In this situation the user has to keep in mind a lot of information and has to take decisions and actions to always perform communication tasks at the lowest costs.

Document EP 1 051 052 discloses a telecommunication device, particularly a mobile phone, comprising several reading devices connected to a control unit for receiving several data carriers containing different calling numbers to enable the user of the telecommunication device to be called under several calling numbers using a single telecommunication device, and to place outgoing calls over the least-cost route.

Document EP 1 357 732 A1 discloses a server for a telecommunication system and a method for establishing a telecommunication connection, where the telecommunication system, in particular for creating a GSM connection, comprises a server, a data memory for outputting a data signal to a control device, at least one local unit having a router connected to a communication interface via a data network, an emulation device for emulating a smart card and at least one terminal interface. The control device of the server receives a request signal from the router and a data signal from the data memory and outputs a switching signal to the smart card functional device and a control signal to the communication interface in such a a way that a smart card of the smart card memory is connected to the emulation device for emulation of the smart card of the terminal interface.

### Summary of the Invention

Therefore, there remains a need to better support a user in this task, i.e. helping the user to always select the most appropriate communication channel.

The invention suggests a method for connecting a first communication device to a first wireless communication network utilizing subscription data of at least a second communication device, where the first and the second communication devices each comprise an adapter module connected between a mobile terminal and a subscriber identity module of the first and the second communication devices comprising the following steps;
- Connecting the first communication device to at least the second communication device through a second wireless communication network using a radio module of the adapter modules;
- Exchanging subscription data between at least the two devices containing information about connection costs for a specific connection for setting up a call to another device;
- Deciding which device connected to the second wireless communication network shall be used to set up the call allowing for lower cost connection;
- Setting up the connection with the subscriber identity data of the communication device which can provide the lowest connection costs.

An important element of the invention is that one mobile communication device of the user checks within a wireless network whether there are other communication devices available. If another communication device provides cheaper communication costs then a connection is set up from the other communication device.

It is one advantage of the invention, that a mobile operator or a third party can assist a mobile user in setting-up a cheap connection and in automating the decision, which subscriber identity data is used for setting up a connection.

According to an embodiment the inventive method further comprises the step of comparing the connection costs of all other communication devices connected to the second wireless network. The comparison of the costs is an important step to determine the cheapest provider. In a development of the invention the method may comprise the step of storing the result of the comparison in a database of the adapter module until a new comparison is executed.

In an alternative embodiment the method comprises the step of storing the result of the comparison on a server. In this case it is advantageous if the method comprises the step of transferring the result of the comparison of the connection costs from the server to the adapter module.

It is beneficial if the method comprises the step of authenticating all devices which are present in the second network. In this way it is impossible that a communication device is utilized fraudulently by charging the communication costs to somebody else.

Along this line in an embodiment of the invention the method further comprises the step of sending subscriber identity module data only if the communicating devices are authenticated to each other.

According to a second aspect the present invention suggests an adapter module for connecting a first device which can be connected to a second device via a communication channel to exchange communication cost related data, wherein a processing means decides which device is used to set up a connection.

According to an advantageous embodiment of the adapter module the first device is a mobile communication device comprising a mobile terminal and a smart card and wherein the adapter module is connectable between the mobile terminal and the smart card.

According to a third aspect the present invention suggests a system comprising a first device which can be connected to a second device via a communication channel to exchange communication cost related data, wherein a processing means decides which device is used to set up a connection.

In an embodiment of the inventive system the devices are mobile communication devices.

According to a forth aspect the present invention suggests a device comprising a base station and a handset, wherein the base station incorporates a plurality of subscriber identification modules, wherein the device further comprises processing means adapted to select one among the plurality of subscriber identity modules providing the lowest connection costs for a specific connection.

In an advantageous embodiment the device is a telecommunication device. It has been found to be useful if the base station and the handset are connected by a wireless connection.

It is particularly advantageous to integrate the base station and the handset into a wireless handset.

### Brief description of the drawings

In the accompanying drawings
Fig. 1 is a schematic depiction of a mobile communication device connected to another device via two different wireless networks: and
Fig. 2 is a schematic block diagram of a mobile communication device

### Detailed description of embodiments of the invention

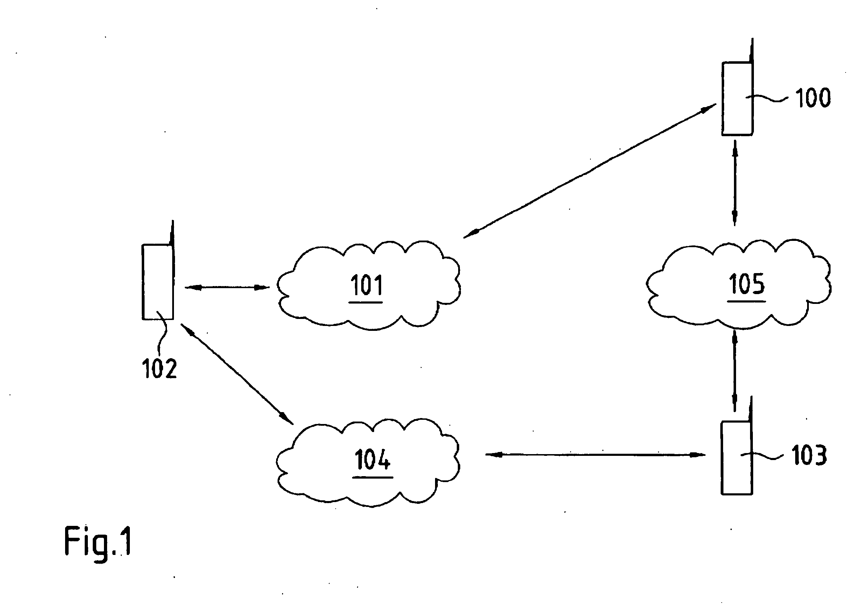

Figure 1 schematically shows a mobile communication device 100, such as, a mobile phone, a PDA or the like, which is connected to a wireless public land mobile network (PLMN) 101. The PLMN 101 is a wireless telecommunication network according to GSM standard or according to the UMTS standard for example. The user of the communication device 100 can set up a connection to another communication device 102 through the network 101.

Figure 1 shows another communication device 103 which is connected to a public land mobile network (PLMN) 104. The user of the communication device 103 can set up a connection to the communication device 102 through the PLMN 104.

The communication devices 100. 102 and 103 are only representative examples of a large plurality of communication devices. The networks 101 and 104 are illustrated as separate networks generally associated with different network providers. However, it is to be understood that the illustration shown in Figure 1 shall also include a situation in which the network 101 and 104 are in reality the same network which is accessed by the users of communication devices 100 and 103 through different subscription plans of the same provider. That means if the connection to communication device 102 is set up from communication device 100 the costs may be different than if the connection is set up from communication device 103. In the following it is assumed that the user of device 100 is identical with the user of device 103. It is in fact frequently the case that an individual has several communication devices with different subscription plans e.g. for national and international use, respectively.

In addition to the connection to the PLMN 101 and 104, respectively the mobile communication devices 100 and device 103 are connected to each other through a second wireless communication network 105. In one embodiment, the second wireless communication network 105 may be configured according a radio technology for short-range communication. Particularly, it may be a ZigBee network. The ZigBee technology is based on the IEEE 802.15.4 standard for wireless personal area networks (WPAN) and is, in principle, known to a person skilled in the art. In another embodiment, the second wireless communication network 105 may be a NFC network (NFC: Near Field Communication), for example. In principle, the NFC technology is likewise known to a skilled person.

The connection between the mobile communication device 100 and the device 103 via the second local wireless communication network 105 is used for exchanging subscription data between the two devices. The devices utilise the subscription data, for deciding whether the connection to the communication device 102 shall be set up through the network 101 or network 104 as will be described in more detail further below.

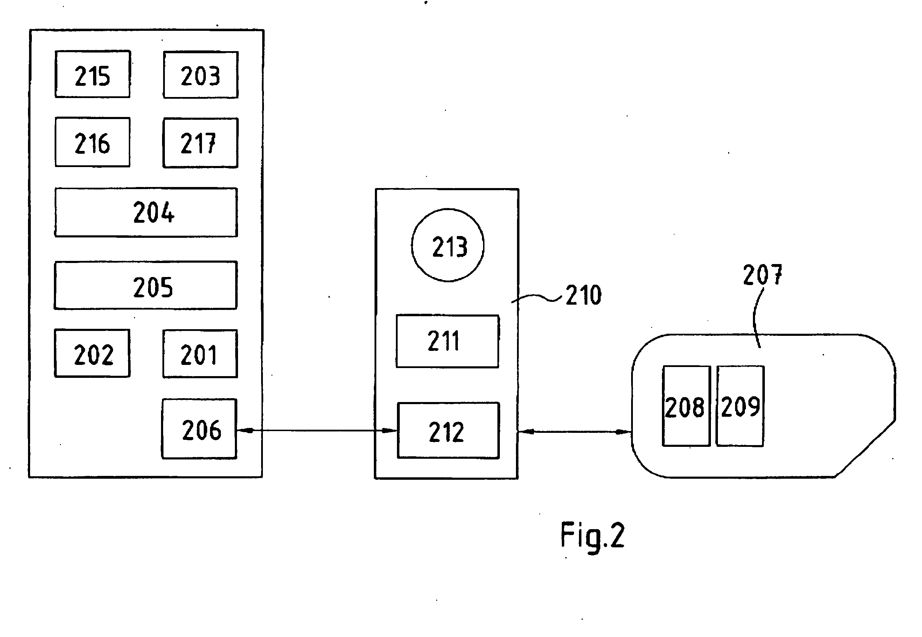

Figure 2 shows a schematic block diagram of the mobile communication device 100. The mobile communication device 100 comprises a mobile terminal 200 including a main processor 201 for controlling the operation of the mobile terminal 200. A memory unit 202 is coupled to the main processor 201 for storing data and applications that can be run on the main processor 201. Furthermore, the mobile terminal 200 comprises one or more communication interfaces. Particularly, the mobile terminal 200 provides a radio interface 203 for connecting the mobile terminal 200 wirelessly to a mobile communication network such as the network 101. A further wireless interface 215 is provided for connecting the mobile communication device 100 to the local wireless communication network 105.

For capturing acoustic signals, particularly for capturing speech from the user of the mobile terminal 200, the mobile terminal 200 comprises a microphone 216. For outputting acoustic signals, the mobile terminal 200 comprises a loudspeaker 217. Moreover, the mobile terminal 200 comprises a display unit 204 and an input unit 205, which can be operated by the user of the mobile communication device 100. The input unit 205 may be configured as a keypad.

By means of a card reader unit 206, the mobile terminal 200 can be connected to a subscriber identity module 207 to form the mobile communication device 100. The subscriber identity module 207 is a so-called smart card, which can be inserted into a card receptacle of the mobile terminal 200 that holds the card in a position, in which its contact elements are connected to corresponding contact elements of the card reader unit 206 of the mobile terminal 200. The card receptacle and the card reader unit 206 are usually arranged within a battery compartment of the mobile terminal 200, which is accessible by the mobile user.

The subscriber identity module 207 may be configured as a subscriber identity module (SIM) according to the GSM standard or as a universal subscriber identity module (USIM) according to the UMTS standard, for example. It comprises a microprocessor 208 and a non-volatile memory 209 and stores pre-configured user-related and network-related data, particularly data identifying the mobile user and data for authenticating the user or his mobile communication device 100 to the cellular mobile network 101 or 104. Moreover, it may store personal data of the mobile user, such as for example, contact data, notes or messages received in the mobile communication device 100.

In the present embodiment, the subscriber identity module 207 is not connected directly to the mobile terminal 200 or its card reader unit 206, but via an adapter module 210. The adapter module 210 comprises a microprocessor 211 and a memory unit 212 for storing data and applications that can be run on the microprocessor 211. When connected between the mobile terminal 200 and the subscriber identity module 207, the adapter module 210 acts as a so-called man in the middle device. Hence, communication signals between the mobile terminal 200 and the subscriber identity module 207 are exchanged via the adapter module 210 that forwards data messages from the mobile terminal 200 to the subscriber identity module 207 and vice versa.

The adapter module 210 may capable of manipulating or modifying the data exchange between the mobile terminal 200 and the subscriber identity module 207. Moreover, the adapter module 210 is capable of initiating a communication with the mobile terminal 200 and/or the subscriber identity module 207 to interact proactively with the mobile terminal 200 and with the subscriber identity module 207. For this purpose, the adapter module 210 may implement the SIM application toolkit (SAT) specified in the specification GSM 11.14 of the 3^{rd} generation project partnership (3GPP), if the subscriber identity module 207 is a SIM according to the GSM standard or the adapter module 210 may implement the USIM application toolkit (USAT) specified in the specification TS 31.111 of the 3GPP, if the subscriber identity module 207 is a USIM. The SAT, or USAT allows the subscriber identity module 207 to access functions of the mobile terminal 200 and particularly comprises so-called proactive commands by means of which the subscriber identity module 207 is able to access the functions of the mobile terminal 200 on its own initiative. By implementing the SAT or USAT in the adapter module 210, the adapter module 210 is able to access the functions of the mobile terminal 200 in the same way as the subscriber identity module 207.

The adapter module 210 also comprises a radio module 213 for connecting the adapter module 210 or the mobile communication device 100 to the second wireless communication network 105. The radio module 213 is controlled by the microprocessor 211 of the adapter module 210 and may contain a digital radio and all other necessary devices to generate radio signals according to the specification of the second local wireless communication network 105. Furthermore, it comprises an antenna to transmit radio signals to the local wireless communication network 105 and to receive radio signals from the local wireless communication network 105.

For connecting the adapter module 210 between the mobile terminal 200 and the subscriber identity module 207, the adapter module 210 comprises a contacting element, which can be inserted into the card receptacle of the mobile terminal 200 and which includes electric contacts for contacting the contact elements of the card reader unit 206. Further electrical contacts are provided for contacting the electric contacts of the subscriber identity module 207. The electric contacts for connecting the adapter module 210 to the mobile terminal 200 and the electric contacts for connecting the adapter module 210 are connected to the microprocessor 211 of the adapter module 210.

As one of the electric contacts of the card reader unit 206 of the mobile terminal 200 acts as a power supply for the subscriber identity module 207, the adapter module 210 can also be supplied with power via this electric contact. Moreover, the adapter module 210 is able to forward data received via an electric contact of the card reader to the corresponding electric contact of the subscriber identity module 207 and vice versa. The forwarded data may be modified by the microprocessor 211 of the adapter module 210 or the adapter module 210 may leave the data unmodified, thereby allowing a normal communication between the mobile terminal 200 and the subscriber identity module 207. Moreover, the proactive commands are sent from adapter module 210 to the mobile terminal 100 via the electric contact, which is provided for sending commands from the subscriber identity module 207 to the mobile terminal 210.

In one exemplary embodiment, the adapter module 210 comprises a thin contacting element, which has essentially the same shape as the subscriber identity module 207 and which can be inserted into the card receptacle of the mobile terminal 200 between the electric contacts of the card reader unit 206 and the subscriber identity module 207. On one surface, the contacting element comprises contact elements for contacting the contact elements of the subscriber identity module 207 and on the opposite surface, contact elements are arranged for contacting the contact elements of the card reader unit 206. The contact elements are connected to the microprocessor 211 of the adapter module 210. The microprocessor 211 and the memory unit 212 of the adapter module 210 may be mounted on a circuit board, which is connected to the contacting element by means of a flexible wire, thereby allowing placing the circuit board into the battery compartment of the mobile terminal 200 together with the battery. As an alternative, the microprocessor 211 and the memory unit 212 may be included in a chip that is mounted on the contacting element. In this embodiment the subscriber identity module 207 is being provided with a cutting for accepting the chip.

In another embodiment, the adapter module 210 comprises a contacting element that has essentially the same shape and thickness as the subscriber identity module 207 and that can be inserted into the card receptacle of the mobile terminal 200 to contact the contact elements of the card reader unit 206. The contacting element is connected to a circuit board via one or more flexible wires. The microprocessor 211 and the memory unit 212 are mounted on the circuit board and in addition, the circuit board comprises a card reader unit connected to the microprocessor 211 for receiving the adapter module 210 to the subscriber identity module 207. The circuit board may be thin enough to place it into the battery compartment of the mobile terminal 200.

The device 103 has a similar structure than the device 100 and it particular it also contains an adapter module 210.

Using the adapter module 210 as shown in figure 2, the mobile communication device 100 can be connected to the device 103 through the second local wireless communication network 105. For establishing the connection via the second local wireless communication network 105, one of the mobile communication device 100 and the device 103 may be operated as master device while the other device is operated as slave device. Both devices 100, 103 have their radio interface 213 activated. The master device scans the second local wireless communication network 105 and recognizes the slave device. For being recognizable by the master device, the slave device may identify itself by sending an identification code that is also stored in the master device. When receiving the identification code, the master device compares the received identification code with the stored identification code. If both identification codes match, the master device recognizes the slave device and sets up a connection to the slave device for exchanging subscription data. The identification process prevents that potentially sensitive data are exchanged within the private area network 103 with devices which do not belong to the network. The subscription data are associated with the corresponding SIM card data and are then stored in the memory unit 212.

The subscription data contain information about the connection cost for a specific connection, e.g. for setting up a call from device 100 to 102 via the network 101. As mentioned before the costs for contacting the device 102 may be quite different if the user sets up the call from his other device 103 through network 104. If the user always chooses the appropriate device he may save costs.

When a call is set up from the communication device 100 the adapter module 210 acts as a man in the middle device and uses the network 105 to contact the adapter module of the device 103 to receive subscription data as it was described before. Then the adapter module 210 decides what the best option is to set up the call. If necessary, a call request from the mobile terminal 200 is intercepted by the adapter module 210 of the device 100. The adapter module 210 replaces the SIM card data of device 100 by the SIM card data of device 103 provided that the latter allow for lower connection costs. Both sets of SIM card data are stored together with the corresponding subscription data in the memory unit 212. Consequently, the network provider and/or the subscription plan of the device 103 are used to set up the call and the user benefits from reduced costs. The underlying decision is taken locally by the adapter module 210 of the device 100. This is completely free of charge for the user because no network access to the provider's network is necessary to make the decision.

In an alternative embodiment a server is contacted by one of the adapter modules 210 present in the local network 105. In this embodiment the data related to the connection costs are transferred to and evaluated on a server of the network provider. When a call is to be set up the adapter module 210 contacts the server by means of the radio interface 203 of the mobile terminal 200. An application running on the server decides which device connected to the network 105 shall be used to set up the call and transfers the corresponding SIM data to the adapter module 210. The SIM data of the communication devices connected to the network 105 have been transferred together with the corresponding connection costs beforehand. After the server has decided which device should be used for the call, the call is set up in the same way as in the first alternative. In the alternative embodiment the user has to bear some additional costs because of the data transfer to the server.

For the sake of simplicity, only two devices, namely device 100 and device 103, are shown as members of the network 105 but there may be more of them. The invention is independent of the number of devices in the network 105.

According to the invention the process of deciding from which communication device or rather to which user account a call shall be charged is handled automatically and the user does not need to take any decision or action contrary to the current situation in which full involvement of the user is required to take decisions and to set up calls.

In general, the proposed solution does not require an additional standalone device such as a low cost router. However, the invention can be implemented as a standalone device incorporating several SIM cards which are connected via a corresponding module which itself connects the standalone to handset which is used by the user to make the call. The handset is connected to the standalone device with a high data rate connection in addition to the ZigBee connecting to the module.

While the invention has been illustrated and described in detail in the drawings and foregoing description, such illustration and description are to be considered illustrative or exemplary and not restrictive; the invention is not limited to the disclosed embodiments. Particularly, the invention has been described with regard to the connection of two devices by wireless networks is an exemplary embodiment. However, the invention is not limited to the connection of two devices and encompasses the connection of a plurality of devices. The connection between a plurality of devices is achieved by repeating the steps which are necessary to connect two devices as often as necessary to finally connect all devices in the network.

In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for connecting a first communication device (100) to a first wireless communication network (101, 104) utilizing subscription data of at least a second communication device (103), where the first and the second communication devices (100, 103) each comprise an adapter module (210) connected between a mobile terminal (200) and a subscriber identity module (207) of the first and the second communication devices (100, 103) comprising the following steps;
- Connecting the first communication device (100) to at least the second communication device (103) through a second wireless communication network (105) using a radio module (213) of the adapter modules (210);
- Exchanging subscription data between at least the two devices (100, 103) containing information about connection costs for a specific connection for setting up a call to another device (102);
- Deciding which device (100, 103) connected to the second wireless communication network (105) shall be used to set up the call allowing for lower cost connection;
- Setting up the connection from the first communication device (100) with the subscriber identity data of the communication device (100, 103) which can provide the lowest connection costs.

2. Method according to claim 1, further comprising the step of comparing the connection costs of all other communication devices (103) connected to the second wireless network (105).

3. Method according to claim 2, further comprising the step of storing the result of the comparison in a memory unit (212) of the adapter module (210) until a new comparison is executed.

4. Method according to claim 2, further comprising the step of storing the result of the comparison on a server.

5. Method according to claims 2 and 3, further comprising the step of transferring the result of the comparison of the connection costs from the server to the adapter module (210).

6. Method according to one of the preceding claims, further comprising the step of authenticating all devices (100, 103) which are present in the second network (105).

7. Method according to one of the preceding claims, further comprising the step of sending subscriber identity module data only if the communicating devices (100, 103) are authenticated to each other.

8. Adapter module (210) arranged for being inserted into a card receptacle of a mobile terminal (200) to connect a subscriber identity module (207) to the mobile terminal (200) forming a mobile communication device comprising; a radio module (213) for connecting the mobile communication device (100) to a second device (103) via a communication channel (105) to exchange communication cost related subscription data to decide which device (100, 103) shall be used to set up a connection.

9. Adapter module according to claim 8, wherein the adapter module comprises a microprocessor (211) and a memory unit (212) for controlling the radio module (213) and for storing subscriber identity module data and subscription data.

10. System comprising a first device (100) and a second device (103) each comprising an adapter module according to claim 8, where the first device (100) can be connected to the second device (103) via second wireless communication network (105) using a radio module (213) of the adapter modules (210) to exchange communication cost related data to decide which device (100, 103) is used to set up a connection.

11. System according to claim 10, wherein the devices (100, 103) are mobile communication devices.

12. System according to claim 10 or 11, wherein a server is contacted to the adapter modules (210) present in the second wireless communication network (105) to evaluate the connection costs.

13. System according to claim 12, where an application is running on the server to decide which device (100, 103) connected to the network (105) shall be used to set up a call.

14. Mobile communication device (100, 103) comprising a mobile terminal (200), a subscriber identity module (207) and an adapter module according to claim 8 inserted into a card receptacle of a mobile terminal (200) to connect the subscriber identity module (207) to the mobile terminal (200).

15. Mobile communication device (100, 103) according to claim 14, wherein the adapter module (210) is arranged to replace the subscriber identity module data of the mobile communication device (100) by the subscriber identity module data of another mobile communication device (103).

## Patentansprüche

1. Verfahren zum Verbinden einer ersten Kommunikationsvorrichtung (100) mit einem ersten drahtlosen Kommunikationsnetz (101, 104) unter Nutzung von Anmeldedaten mindestens einer zweiten Kommunikationsvorrichtung (103), wobei die erste und die zweite Kommunikationsvorrichtung (100, 103) jeweils ein Adaptermodul (210) umfassen, das zwischen einem mobilen Endgerät (200) und einem Teilnehmeridentitätsmodul (207) der ersten und der zweiten Kommunikationsvorrichtung (100, 103) geschaltet ist, wobei das Verfahren die folgenden Schritte umfasst:
- Verbinden der ersten Kommunikationsvorrichtung (100) mindestens mit der zweiten Kommunikationsvorrichtung (103) über ein zweites drahtloses Kommunikationsnetz (105) unter Verwendung eines Funkmoduls (213) der Adaptermodule (210);
- Austauschen von Anmeldedaten mindestens zwischen den zwei Vorrichtungen (100, 103), die Informationen über Verbindungskosten für eine spezifische Verbindung zum Aufbauen eines Anrufs mit einer anderen Vorrichtung (102) enthalten;
- Entscheiden, welche mit dem zweiten drahtlosen Kommunikationsnetz (105) verbundene Vorrichtung (100, 103) zum Aufbauen des Anrufs verwendet werden soll, der eine preiswertere Verbindung zulässt;
- Aufbauen der Verbindung von der ersten Kommunikationsvorrichtung (100) mit den Teilnehmeridentitätsdaten derjenigen Kommunikationsvorrichtung (100, 103), die die niedrigsten Verbindungskosten bereitstellen kann.

2. Vorrichtung nach Anspruch 1, die ferner den Schritt des Vergleichens der Verbindungskosten aller anderen mit dem zweiten drahtlosen Netz (105) verbundenen Kommunikationsvorrichtungen (103) umfasst.

3. Verfahren nach Anspruch 2, das ferner den Schritt des Speicherns des Ergebnisses des Vergleichs in einer Speichereinheit (212) des Adaptermoduls (210), bis ein neuer Vergleich ausgeführt wird, umfasst.

4. Verfahren nach Anspruch 2, das ferner den Schritt des Speicherns des Ergebnisses des Vergleichs in einem Server umfasst.

5. Verfahren nach Anspruch 2 oder 3, das ferner den Schritt des Übertragens des Ergebnisses des Vergleichs der Verbindungskosten von dem Server zu dem Adaptermodul (210) umfasst.

6. Verfahren nach einem der vorhergehenden Ansprüche, das ferner den Schritt des Authentisierens aller Vorrichtungen (100, 103), die in dem zweiten Netz (105) vorhanden sind, umfasst.

7. Verfahren nach einem der vorhergehenden Ansprüche, das ferner den Schritt des Sendens von Teilnehmeridentitätsmoduldaten nur dann umfasst, wenn die Kommunikationsvorrichtungen (100, 103) füreinander authentisiert worden sind.

8. Adaptermodul (210), das dafür ausgelegt ist, in eine Kartenaufnahme eines mobilen Endgeräts (200) eingeführt zu werden, um ein Teilnehmeridentitätsmodul (207) mit dem mobilen Endgerät (200) zu verbinden und eine Mobilkommunikationsvorrichtung zu bilden, wobei das Adaptermodul umfasst:
ein Funkmodul (213) zum Verbinden der Mobilkommunikationsvorrichtung (100) mit einer zweiten Vorrichtung (103) über einen Kommunikationskanal (105) zum Austauschen von Anmeldedaten, die sich auf Kommunikationskosten beziehen, um zu entscheiden, welche Vorrichtung (100, 103) für den Aufbau einer Verbindung verwendet werden soll.

9. Adaptermodul nach Anspruch 8, wobei das Adaptermodul einen Mikroprozessor (211) und eine Speichereinheit (212) zum Steuern des Funkmoduls (213) und zum Speichern von Teilnehmeridentitätsmoduldaten und Anmeldedaten umfasst.

10. System, das eine erste Vorrichtung (100) und eine zweite Vorrichtung (103) umfasst, die jeweils ein Adaptermodul nach Anspruch 8 umfassen, wobei die erste Vorrichtung (100) unter Verwendung eines Funkmoduls (213) der Adaptermodule (210) über ein zweites drahtloses Kommunikationsnetz (105) mit der zweiten Vorrichtung (103) verbunden werden kann, um Daten auszutauschen, die sich auf Kommunikationskosten beziehen, um zu entscheiden, welche Vorrichtung (100, 103) für den Aufbau einer Verbindung verwendet wird.

11. System nach Anspruch 10, bei dem die Vorrichtungen (100, 103) Mobilkommunikationsvorrichtungen sind.

12. System nach Anspruch 10 oder 11, bei der ein Server mit den in dem zweiten drahtlosen Kommunikationsnetz (105) vorhandenen Adaptermodulen (210) in Kontakt steht, um die Verbindungskosten zu bewerten.

13. System nach Anspruch 12, bei dem in dem Server eine Anwendung ausgeführt wird, um zu entscheiden, welche mit dem Netz (105) verbundene Vorrichtung (100, 103) für den Aufbau eines Anrufs verwendet werden soll.

14. Mobilkommunikationsvorrichtung (100, 103), die ein mobiles Endgerät (200), ein Teilnehmeridentitätsmodul (207) und ein Adaptermodul nach Anspruch 8, das in eine Kartenaufnahme eines mobilen Endgeräts (200) eingeführt ist, umfasst, um das Teilnehmeridentitätsmodul (207) mit dem mobilen Endgerät (200) zu verbinden.

15. Mobilkommunikationsvorrichtung (100, 103) nach Anspruch 14, bei der das Adaptermodul (210) dafür ausgelegt ist, die Teilnehmeridentitätsmoduldaten der Mobilkommunikationsvorrichtung (100) durch die Teilnehmeridentitätsmoduldaten einer anderen Mobilkommunikationsvorrichtung (103) zu ersetzen.

## Revendications

1. Procédé de connexion d'un premier appareil de communication (100) à un premier réseau de communication sans fil (101, 104) en utilisant les données d'abonnement d'au moins un deuxième appareil de communication (103), dans lequel les premier et deuxième appareils de communication (100, 103) comprennent chacun un module adaptateur (210) connecté entre un terminal mobile (200) et un module d'identité d'abonné (207) des premier et deuxième appareils de communication (100, 103), le procédé comprenant les étapes suivantes consistant à :
- Connecter le premier appareil de communication (100) au moins au deuxième appareil de communication (103) par l'intermédiaire d'un deuxième réseau de communication sans fil (105) au moyen d'un module radio (213) des modules adaptateurs (210) ;
- Échanger des données d'abonnement entre au moins les deux appareils (100, 103) contenant des informations sur les coûts de connexion d'une connexion spécifique visant à établir un appel vers un autre appareil (102) ;
- Déterminer quel appareil (100, 103) connecté au deuxième réseau de communication sans fil (105) doit être utilisé pour établir l'appel permettant une connexion au moindre coût ;
- Établir la connexion depuis le premier appareil de communication (100) à l'aide des données d'identité d'abonné de l'appareil de communication (100, 103) qui offre les coûts de connexion les plus bas.

2. Procédé selon la revendication 1, comprenant en outre l'étape consistant à comparer les coûts de connexion de tous les autres appareils de communication (103) connectés au deuxième réseau sans fil (105).

3. Procédé selon la revendication 2, comprenant en outre l'étape consistant à stocker le résultat de la comparaison dans une mémoire (212) du module adaptateur (210) jusqu'à l'exécution d'une nouvelle comparaison.

4. Procédé selon la revendication 2, comprenant en outre l'étape consistant à stocker le résultat de la comparaison sur un serveur.

5. Procédé selon les revendications 2 et 3, comprenant en outre l'étape consistant à transférer le résultat de la comparaison des coûts de connexion du serveur au module adaptateur (210).

6. Procédé selon l'une des revendications précédentes, comprenant en outre l'étape consistant à authentifier tous les appareils (100, 103) présents sur le deuxième réseau (105).

7. Procédé selon l'une des revendications précédentes, comprenant en outre l'étape consistant à envoyer les données du module d'identité d'abonné uniquement si les appareils de communication (100, 103) sont authentifiés entre eux.

8. Module adaptateur (210) configuré pour être inséré dans un logement pour carte d'un terminal mobile (200) en vue de connecter un module d'identité d'abonné (207) au terminal mobile (200) afin de former un appareil de communication mobile, comprenant :
un module radio (213) pour connecter l'appareil de communication mobile (100) à un deuxième appareil (103) via un canal de communication (105) afin d'échanger des données d'abonnement relatives aux coûts de communication dans le but de déterminer quel appareil (100, 103) doit être utilisé pour établir une connexion.

9. Module adaptateur selon la revendication 8, qui comprend un microprocesseur (211) et une mémoire (212) afin de contrôler le module radio (213) et de stocker les données du module d'identité d'abonné ainsi que les données d'abonnement.

10. Système comprenant un premier appareil (100) et un deuxième appareil (103), comprenant chacun un module adaptateur selon la revendication 8, dans lequel le premier appareil (100) peut être connecté au deuxième appareil (103), par l'intermédiaire d'un deuxième réseau de communication sans fil (105) à l'aide d'un module radio (213) des modules adaptateurs (210), afin d'échanger des données relatives aux coûts de communication en vue de déterminer quel appareil (100, 103) doit être utilisée pour établir une connexion.

11. Système selon la revendication 10, dans lequel les appareils (100, 103) sont des appareils de communication mobiles.

12. Système selon la revendication 10 ou 11, dans lequel un serveur est mis en contact avec les modules adaptateurs (210) présents sur le deuxième réseau de communication sans fil (105) afin d'évaluer les coûts de connexion.

13. Système selon la revendication 12, dans lequel une application est exécutée sur le serveur pour déterminer quel appareil (100, 103) connecté au réseau (105) doit être utilisé pour établir un appel.

14. Appareil de communication mobile (100, 103) comprenant un terminal mobile (200), un module d'identité d'abonné (207) et un module adaptateur selon la revendication 8 inséré dans un logement pour carte d'un terminal mobile (200), afin de connecter le module d'identité d'abonné (207) au terminal mobile (200).

15. Appareil de communication mobile (100, 103) selon la revendication 14, dans lequel le module adaptateur (210) est configuré pour remplacer les données du module d'identité d'abonné de l'appareil de communication mobile (100) par les données du module d'identité d'abonné d'un autre appareil de communication mobile (103).
